# EUROPEAN PATENT APPLICATION

(11) **EP 4 478 719 A1**
(43) Date of publication of application: **18.12.2024**
(21) Application number: 23755737.6
(22) Date of filing: 10.02.2023
(51) Int. Cl.: H04N 21/431, G06F 3/048

(54) **PLAYING METHOD, PLAYING APPARATUS, AND COMPUTER-READABLE STORAGE MEDIUM**

(30) Priority: 21.02.2022 CN 202210159286
(71) Applicant: BEIJING BYTEDANCE NETWORK TECHNOLOGY CO., LTD., Beijing 100041 (CN)
(72) Inventor: QIU, Hao, Beijing 100086 (CN); ZHOU, Jingran, Beijing 100086 (CN); GU, Tianyu, Beijing 100086 (CN)
(74) Representative: Dentons UK and Middle East LLP
(86) International application number: PCT/CN2023/075402
(87) International publication number: WO 2023/155734

(57) **Abstract**

The present disclosure relates to the technical field of terminals. Disclosed are a video display method and apparatus, and a storage medium. The video display method comprises : displaying a mask layer in an upper layer of the currently displayed video, wherein the mask layer comprises a target interaction control; in response to an operation from a user on the target interaction control being detected, eliminating the mask layer; and in response to a video switching operation from the user being detected, displaying another video.

## Description

### CROSS-REFERENCE TO RELATED APPLICATIONS

The present disclosure is based on and claims priority of Chinese application for invention No. 202210159286.2, filed on February 21, 2022, the disclosure of which is hereby incorporated into this disclosure by reference in its entirety.

### TECHNICAL FIELD

The present disclosure relates to the technical field of terminals, and in particular, to a video display method, apparatus and storage medium.

### BACKGROUND

In the related art, some interaction controls may be presented in a video display interface when a user watches a video, such as a button for following the video's publisher. These interaction controls may be sometimes ignored by the user while watching a video.

### SUMMARY

According to a first aspect of some embodiments of the present disclosure, a video display method is provided, comprising: displaying a mask layer over a currently displayed video, wherein the mask layer comprises a target interaction control; removing the mask layer in response to detecting an operation of a user on the target interaction control; and displaying another video in response to detecting a video switching operation of the user.

In some embodiments, a background transparency of at least part of the mask layer is lower than a transparency threshold.

In some embodiments, the background transparency of the mask layer is gradually changed in a reference direction.

In some embodiments, interaction control(s) other than the target interaction control corresponding to the video are in a disabled state in case that the mask layer is displayed.

In some embodiments, the video display method further comprises: maintaining a display of the mask layer and generating operation feedback in response to detecting an operation of the user, which is not a video switching operation, on an area other than the target interaction control.

In some embodiments, the area is located in the mask layer, or the area is located in a display area of the video.

In some embodiments, the operation feedback comprises at least one of: generating vibration by a terminal used to display the video, or displaying the target interaction control in a target display mode.

In some embodiments, the target display mode comprises at least one of displaying with vibration or highlighting.

In some embodiments, the operation on the target interaction control is used to trigger following a publisher of the video.

In some embodiments, the video display method further comprises: determining whether the user has followed the publisher of the video to display the mask layer over the video in case that the user has not followed the publisher of the video.

In some embodiments, the mask layer further comprises an avatar control of the publisher of the video.

In some embodiments, the target interaction control is a button.

In some embodiments, the mask layer further comprises guide information for guiding the user to operate the target interaction control.

In some embodiments, the video switching operation is a slide-up operation or a slide-down operation.

According to a second aspect of some embodiments of the present disclosure, a video display apparatus is provided, comprising: memory; a processor coupled to the memory, the processor configured to, based on instructions stored in the memory, carry out any one of the foregoing video display methods.

According to a third aspect of some embodiments of the present disclosure, there is provided a computer-readable storage medium on which a computer program is stored, wherein the program when executed by a processor carries out any one of the foregoing video display methods.

According to a fourth aspect of some embodiments of the present disclosure, there is provided a computer program comprising instructions which when executed by a processor, cause the processor to implement any one of the foregoing video display methods.

Other features and advantages of the present disclosure will become apparent from the following detailed description of exemplary embodiments of the present disclosure with reference to the accompanying drawings.

### BRIEF DESCRIPTION OF THE DRAWINGS

In order to more clearly explain the embodiments of the present disclosure or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 shows a schematic diagram of a video display interface.
FIG. 2 shows a schematic flowchart of a video display method according to some embodiments of the present disclosure.
FIG. 3 is a schematic diagram showing the positional relationship between a mask layer and a layer where the video is located.
FIGS. 4A-4C show schematic diagrams of video display interfaces according to some embodiments of the present disclosure.
FIG. 5 shows a schematic flowchart of a video display method according to other embodiments of the present disclosure.
FIG. 6 shows a schematic flowchart of a video display method according to some embodiments of the present disclosure.
FIG. 7 shows a schematic structural diagram of a video display apparatus according to some embodiments of the present disclosure.
FIG. 8 shows a schematic structural diagram of a video display apparatus according to other embodiments of the present disclosure.
FIG. 9 shows a schematic structural diagram of a video display apparatus according to further embodiments of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the disclosure, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and numerical values of the components and steps set forth in these examples do not limit the scope of the disclosure.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an article is defined in a drawing, there is no need for further discussion in the accompanying drawings.

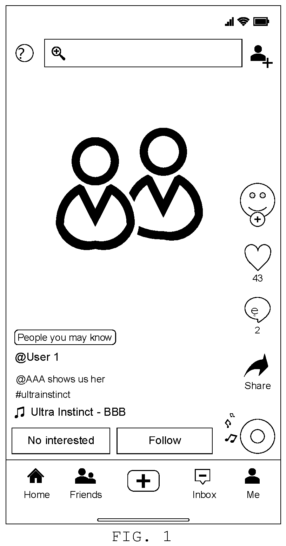

FIG. 1 shows a schematic diagram of a video display interface. The video in this interface is published by "User 1". When a user watches a video, for example, an Avatar control, a Comment control, and a Share control, etc. are presented on the video display interface. In addition, a Follow control is also presented in the lower part of the video display interface. The user completes the operation of following the video's publisher User 1 when a user clicks the Follow control.

However, after analysis, the inventor found that even if users are interested in the publisher, they often ignore the Follow control, so that the "follow" operation cannot be completed. Because, even if the user does not operate the control, it will not affect the viewing of the current video. Therefore, in such an interface, the user cannot be guided to perform a "follow" operation. Therefore, the completion rate of a preset operation is low, and the interaction control deployed in the video interface cannot be effectively utilized.

The present disclosure provides a video display method to solve the technical problem that the completion rate of the preset operation is low and the interaction control deployed in the video interface cannot be effectively utilized.

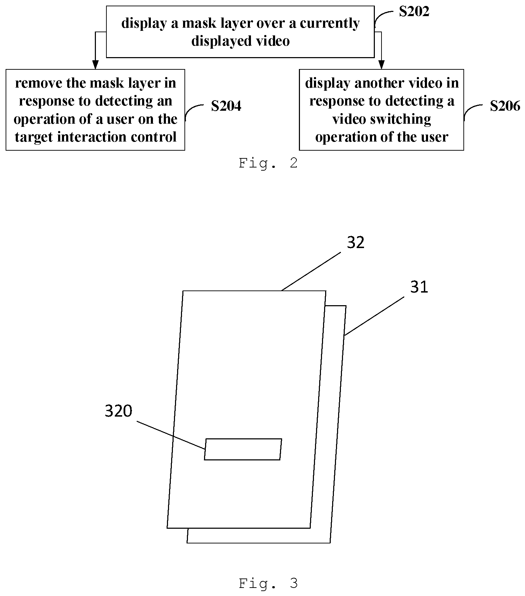

FIG. 2 shows a schematic flowchart of a video display method according to some embodiments of the present disclosure. As shown in FIG. 2, the video display method of the embodiments comprise steps S202-S206.

In step S202, a mask layer is displayed over a currently displayed video, wherein the mask layer comprises a target interaction control.

The video is displayed in a terminal application, for example, in a video APP (Application) of a mobile phone.

Assuming that a direction perpendicular to the terminal screen for video display and toward the outside of the screen is the z-axis direction, the coordinate value of the mask layer on the z-axis is greater than the coordinate value of the video on the z-axis. As shown in FIG. 3, the mask layer 32 is located over the layer 31 where the video is located, and a target interaction control 320 is provided in the mask layer 32.

Since the mask layer is located over the video, it affects the viewing of the video, so that the user's attention is more inclined to the target interaction control disposed in the mask layer.

In some embodiments, a background transparency of at least part of the mask layer is lower than a transparency threshold. Thus, the mask layer can at least partially block the video. For example, a lower transparency can be assigned to an area of the mask layer that corresponds to the center of the video, or an area where other controls related to the video are located. Therefore, the viewing or use of the video will be significantly affected due to the presence of the mask layer.

In some embodiments, the background transparency of the mask layer is gradually changed in a reference direction. For example, the transparency of the mask layer can gradually decrease from bottom to top if control(s) other than the target interaction control in the video interface are mainly located in the lower portion of the video interface, so as to block more controls. A portion of the video is viewable to the user by displaying with a gradient transparency, so that the user can judge whether the video or the publisher of the video is interested according to the limited viewable content, so as to further determine whether to operate the target operation control.

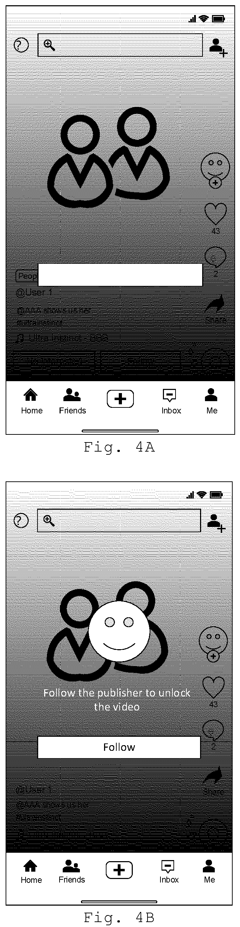

FIG. 4A exemplarily shows the effect of adding a gradient mask layer over a video. A target interaction control with button-type is provided in the mask layer in this embodiment, wherein the mask layer has a black background, and a transparency that increases gradually from bottom to top. In FIG. 4A, the mask layer only covers the video display area, but does not cover the system interaction controls of the application where the video is presented, such as "Home", "Friends", "Inbox", "Me" and other interaction controls. As required, the coverage of the mask layer may also be larger (for example, covering part or all of the system interaction control area), or smaller (for example, smaller than the video display area), which will not be repeated herein.

In some embodiments, the target interaction control is a button. The operation on the target interaction control is, for example, a selection operation that is completed by, for example, clicking. According to needs, the target interaction control and the manner of operating the target interaction control may also be implemented in other ways, which will not be described herein.

In some embodiments, the operation triggered by the target interaction control is an operation associated with the currently displayed video, such as an operation on the currently displayed video, or an operation on the publisher of the video.

In some embodiments, the operation on the target interaction control is used to trigger an operation of following a publisher of the video. In this case, in addition to the target interaction control, the mask layer further comprises, for example, an Avatar control showing the publisher of the video, so that the user can clearly understand the object to be followed.

In some embodiments, the mask layer further comprises guide information for guiding a user to operate the target interaction control. For example, the guide information may be "follow the publisher to unlock the video" when the target interaction control is an interaction control for following a video publisher. Therefore, the user can more clearly understand the purpose of operating the target interaction control, which makes the interaction more friendly.

In some embodiments, in a situation where the mask layer is displayed, interaction control(s) other than the target interaction control corresponding to the video are in a disabled state. For example, in FIG. 4A, the Avatar control, the Like control, the Comment control and the Share control located on the right side of the interface may be disabled. In addition, the text associated with the video can also be invisible, for example, it can be hidden or obscured by a non-transparent portion of the mask layer. Of course, these interaction controls other than the target interaction control can also be visible to the user but disabled, such as grayed out, or can be displayed normally but cannot be used. Therefore, the use of some functions corresponding to the currently displayed video will be affected in the presence of the mask layer.

In step S204, the mask layer is removed in response to detecting an operation of a user on the target interaction control, and the video can now be completely presented to the user. Thus, the video can be viewed in its entirety if the user performs a preset operation.

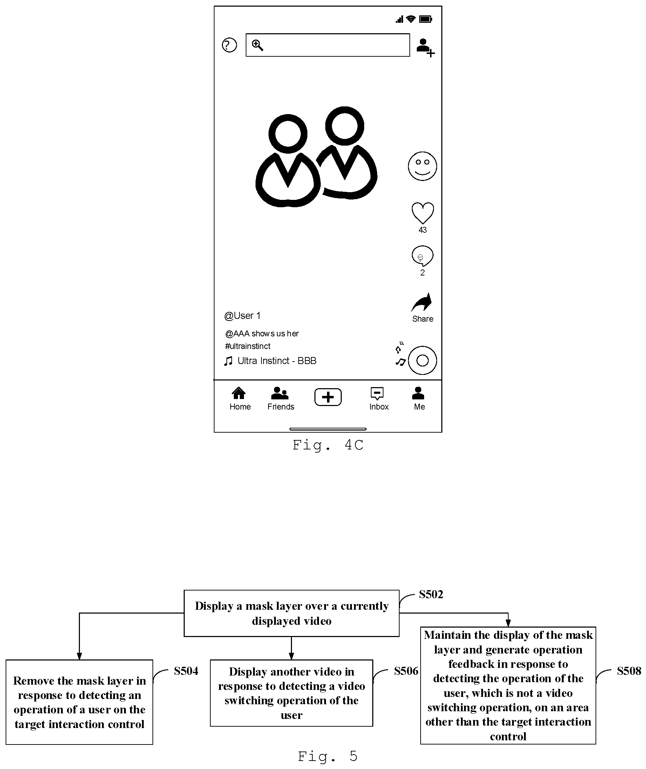

Still taking a target interaction control that is a control for triggering the "follow" function as an example, FIG. 4B exemplarily shows a schematic diagram in which a publisher avatar control and some guide information are added on the mask layer. The user establishes a "follow" relationship with the publisher after the user clicks the Follow button in the interface. After that, the mask layer is removed and the user can view the video in its entirety, as shown in FIG. 4C.

In some embodiments, if interaction control(s) other than the target interaction control corresponding to the video are in a disabled state when the mask layer is displayed, these interaction control(s) are restored to the enabled state after the mask layer is removed, so that the user can obtain complete video viewing and operating experience after operating the target interaction control.

In step S206, another video is displayed in response to detecting a video switching operation of the user. The another video is a video other than the video displayed currently.

Thus, the operation on the target interaction control is not mandatory. Video switching can be performed if the user does not want to operate the target interaction control corresponding to the currently displayed video.

In some embodiments, the video switching operation is a slide-up operation or a slide-down operation which is used to switch to a previous or next video. As required, the video switching operation may also be other operations, such as an operation of clicking a button to switch the video, an operation of shaking the terminal, and the like.

After switching to another video, the other video can be displayed in a manner as described with reference to the foregoing embodiment, or in other manners, which will not be repeated herein.

Through the above embodiments, the present disclosure adds a mask layer over a video, so that the user's attention can be focused on the target interaction control. The user needs to operate the target interaction control if a better video viewing experience is desired. The video can be switched if the user does not want to operate the target interaction control. That is, the operation on the target interaction control is not mandatory. Thus, the present disclosure can more effectively guide the user to operate the target interaction control, so as to improve the utilization rate of the target interaction control, thereby improving the completion rate of a preset operation, and making the control deployment in the application more reasonable.

In some embodiments, operation feedback can be further provided to prompt the user to operate the target interaction control in case that the mask layer is displayed. An embodiment of the video display method of the present disclosure will be described below with reference to FIG. 5.

FIG. 5 shows a schematic flowchart of a video display method according to other embodiments of the present disclosure. As shown in FIG. 5, the video display method of the embodiments comprise steps S502-S508.

In step S502, a mask layer is displayed over a currently displayed video, wherein the mask layer comprises a target interaction control.

In step S504, the mask layer is removed in response to detecting an operation of a user on the target interaction control.

In step S506, another video is displayed in response to detecting a video switching operation of the user.

For specific implementations of steps S502 to S506, reference may be made to the foregoing embodiments, which will not be repeated herein.

In step S508, the display of the mask layer is maintained and operation feedback is generated in response to detecting the operation of the user, which is not a video switching operation, on an area other than the target interaction control. The operation feedback is used to prompt the user to operate the target interaction control.

In some embodiments, the operation feedback comprises at least one of: generating vibration by a terminal used to display the video, or displaying the target interaction control in a target display mode. The target display mode comprises, for example, at least one of displaying with vibration or highlighting. In the case of displaying with vibration, the target interaction control moves at a high frequency within a preset range in cooperation with the vibration of the terminal, so that the user can visually and tactilely take notice of the target interaction control. In the case of highlighting, the target interaction control is displayed, for example, in a brighter color. Therefore, the target interaction control can further attract the user's attention, and prompt the user that the other area can be performed only after the operation on the target interaction control.

For example, the video switching operation is a slide-up operation or slide-down operation, and the target interaction control is a button. If the user touches an area other than the button, it is further detected whether the user input is a slide-up operation or slide-down operation. If not, it is determined that the user does not want to switch the video, and in this case the user can be prompted to click the button through operation feedback.

In some embodiments, the area other than the target interaction control in step S508 is located in the mask layer. In this case, if the user operates an area other than the mask layer, for example, if the user operates the system interaction control "Home" shown in FIG. 4B, no operation feedback will be generated.

In some embodiments, the area other than the target interaction control in step S508 is located in the display area of the video. For example, the mask layer does not completely cover the video display area. In this case, even if the user clicks on an area other than the mask layer, no operation feedback will be generated if the user's click operation is not a video switching operation.

According to the above embodiments, the present disclosure can further guide the user to operate the target interaction control, thereby improving the completion rate of a preset operation, and making the control deployment in the application more reasonable. Moreover, through providing the operation feedback, the user's operation efficiency is improved.

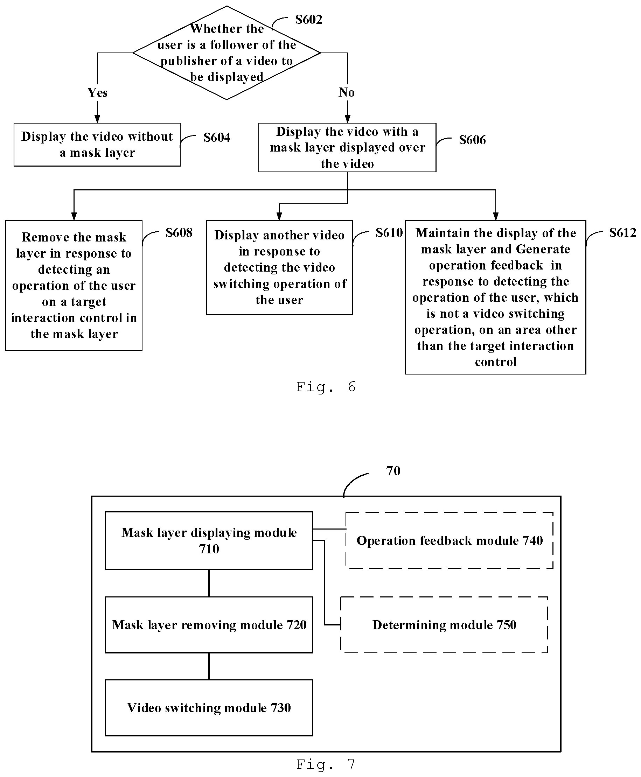

Before displaying the video, it can be judged whether the user is a follower of the publisher if the target interaction control is used to trigger the user to follow the video's publisher. An embodiment of the video display method of the present disclosure will be described below with reference to FIG. 6.

FIG. 6 shows a schematic flowchart of a video display method according to some embodiments of the present disclosure. As shown in FIG. 6, the video display method of this embodiments comprise steps S602-S606.

In step S602, it is determined whether the user is a follower of the publisher of a video to be displayed. If yes, step S604 is executed; if not, steps S606-S612 are executed.

In some embodiments, a server further acquires a relationship between the user and the video publisher after acquiring the video to be played" so as to determine whether a mask layer needs to be displayed, and sends information corresponding to the determined result to a terminal for displaying the video. The terminal determines whether to display a mask layer according to the information sent by the server.

In step S604, the video is displayed without a mask layer.

In step S606, the video is displayed with a mask layer displayed over the video.

In step S608, the mask layer is removed in response to detecting an operation of the user on a target interaction control in the mask layer.

In step S610, another video is displayed in response to detecting the video switching operation of the user.

In step S612, the display of the mask layer is maintained and operation feedback is generated in response to detecting the operation of the user, which is not a video switching operation, on an area other than the target interaction control.

Therefore, the above embodiments can display a mask layer only when the user needs to be guided to operate the target interaction control, which can improve the user's experience.

An embodiment of the video display apparatus of the present disclosure will be described below with reference to FIG. 7.

FIG. 7 shows a schematic structural diagram of a video display apparatus according to some embodiments of the present disclosure. As shown in FIG. 7, the video display apparatus 70 of the embodiments comprise: a mask layer displaying module 710 configured to display a mask layer over a currently displayed video, wherein the mask layer comprises a target interaction control; a mask layer removing module 720 configured to remove the mask layer in response to detecting an operation of a user on the target interaction control; a video switching module 730 configured to display another video in response to detecting a video switching operation of the user.

In the above embodiment, the present disclosure adds a mask layer over a video, so that the user's attention can be focused on the target interaction control. The user needs to operate the target interaction control if a better video viewing experience is desired. The video can be switched if the user does not want to operate the target interaction control. That is, the operation on the target interaction control is not mandatory. Thus, the present disclosure can more effectively guide the user to operate the target interaction control, so as to improve the utilization rate of the target interaction control, thereby improving the completion rate of a preset operation, and making the control deployment in the application more reasonable.

In some embodiments, a background transparency of at least part of the mask layer is lower than a transparency threshold.

In some embodiments, the background transparency of the mask layer is gradually changed in a reference direction.

In some embodiments, interaction control(s) other than the target interaction control corresponding to the video are in a disabled state in case that the mask layer is displayed.

In some embodiments, the video display apparatus 70 further comprises: an operation feedback module 740 configured to, maintain a display of the mask layer and generating operation feedback in response to detecting an operation of the user, which is not a video switching operation, on an area other than the target interaction control.

In some embodiments, the area is located in the mask layer, or the area is located in a display area of the video.

In some embodiments, the operation feedback comprises at least one of: generating vibration by a terminal used to display the video, or displaying the target interaction control in a target display mode.

In some embodiments, the target display mode comprises at least one of displaying with vibration or highlighting.

In some embodiments, the operation on the target interaction control is used to trigger following a publisher of the video.

In some embodiments, the video display apparatus 70 further comprises: a determining module 750 configured to determine whether the user has followed the publisher of the video to display the mask layer over the video in case that the user has not followed the publisher of the video.

In some embodiments, the mask layer further comprises an avatar control of the publisher of the video.

In some embodiments, the target interaction control is a button.

In some embodiments, the mask layer further comprises guide information for guiding the user to operate the target interaction control.

In some embodiments, the video switching operation is a slide-up operation or a slide-down operation.

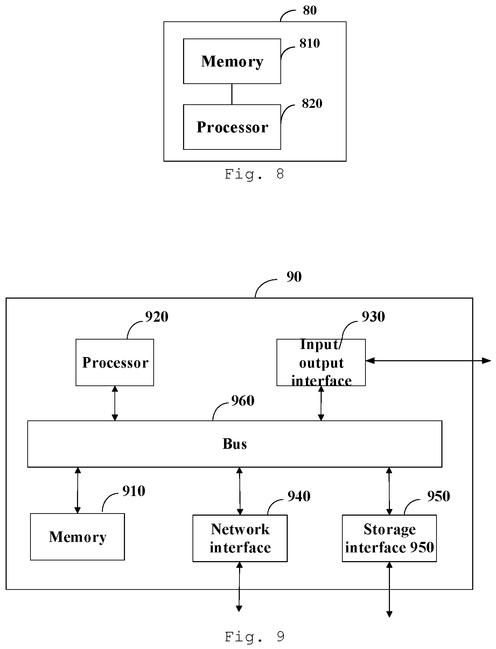

FIG. 8 shows a schematic structural diagram of a video display apparatus according to other embodiments of the present disclosure. As shown in FIG. 8, the video display apparatus 80 of this embodiment comprises: a memory 810 and a processor 820 coupled to the memory 810, the processor 820 configured to, based on instructions stored in the memory 810, carry out the video display method according to any one of the foregoing embodiments.

The memory 810 may comprise, for example, system memory, a fixed non-volatile storage medium, or the like. The system memory stores, for example, an operating system, application programs, a boot loader (Boot Loader), and other programs.

FIG. 9 shows a schematic structural diagram of a video display apparatus according to further embodiments of the present disclosure. As shown in FIG. 9, the video display apparatus 90 of this embodiment comprises: a memory 910 and a processor 920, and may further comprise an input-output interface 930, a network interface 940, a storage interface 950, and the like. These interfaces 930, 940, 950 and the memory 910 and the processor 920 may be connected to each other through a bus 960, for example. The input-output interface 930 provides a connection interface for input-output devices such as a display, a mouse, a keyboard, and a touch screen. The network interface 940 provides a connection interface for various networked devices. The storage interface 950 provides a connection interface for external storage devices such as an SD card and a USB flash disk.

Embodiments of the present disclosure further provides a computer-readable storage medium on which a computer program is stored, characterized in that the program when executed by a processor implements any one of the foregoing video display methods.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (comprising but not limited to disk storage, CD-ROM, optical storage device, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.
The above is merely preferred embodiments of this disclosure, and is not limitation to this disclosure. Within spirit and principles of this disclosure, any modification, replacement, improvement and etc. shall be contained in the protection scope of this disclosure.

## Claims

1. A video display method, comprising:
displaying a mask layer over a currently displayed video, wherein the mask layer comprises a target interaction control;
removing the mask layer in response to detecting an operation of a user on the target interaction control; and
displaying another video in response to detecting a video switching operation of the user.

2. The video display method according to claim 1, wherein a background transparency of at least part of the mask layer is lower than a transparency threshold.

3. The video display method according to claim 2, wherein the background transparency of the mask layer is gradually changed in a reference direction.

4. The video display method according to any one of claims 1 to 3, wherein interaction control(s) other than the target interaction control corresponding to the video are in a disabled state in case that the mask layer is displayed.

5. The video display method according to any one of claims 1 to 4, further comprising:
maintaining a display of the mask layer and generating operation feedback in response to detecting an operation of the user, which is not a video switching operation, on an area other than the target interaction control.

6. The video display method according to claim 5, wherein the area is located in the mask layer, or the area is located in a display area of the video.

7. The video display method according to claim 5 or 6, wherein the operation feedback comprises at least one of: generating vibration by a terminal used to display the video, or displaying the target interaction control in a target display mode.

8. The video display method according to claim 7, wherein the target display mode comprises at least one of displaying with vibration or highlighting.

9. The video display method according to any one of claims 1 to 8, wherein the operation on the target interaction control is used to trigger following a publisher of the video.

10. The video display method according to claim 9, further comprising:
determining whether the user has followed the publisher of the video to display the mask layer over the video in case that the user has not followed the publisher of the video.

11. The video display method according to claim 9 or 10, wherein the mask layer further comprises an avatar control of the publisher of the video.

12. The video display method according to any one of claims 1 to 11, wherein the target interaction control is a button.

13. The video display method according to any one of claims 1 to 12, wherein the mask layer further comprises guide information for guiding the user to operate the target interaction control.

14. The video display method according to any one of claims 1 to 13, wherein the video switching operation is a slide-up operation or a slide-down operation.

15. A video display apparatus, comprising:
memory; and
a processor coupled to the memory, the processor configured to, based on instructions stored in the memory, carry out the video display method according to any one of claims 1 to 14.

16. A computer-readable storage medium on which a computer program is stored, which when executed by a processor implements the video display method according to any one of claims 1 to 14.

17. A computer program, comprising:
instructions that, when executed by a processor, cause the processor to perform the video display method according to any one of claims 1 to 14.
